(19) Europäisches Patentamt
European Patent Office
Office européen des brevets

(11) EP 2 282 547 A2

(12) **EUROPEAN PATENT APPLICATION**

(43) Date of publication:
09.02.2011 Bulletin 2011/06

(51) Int Cl.:
*H04N 9/31* (2006.01)

(21) Application number: 10008026.6

(22) Date of filing: 02.08.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(30) Priority: 31.07.2009 JP 2009179774
24.05.2010 JP 2010118460

(71) Applicant: Sanyo Electric Co., Ltd.
Osaka 570-8677 (JP)

(72) Inventors:
• HARAGUCHI, Masahiro
Moriguchi-shi
Osaka 570-8677 (JP)
• INOUE, Masutaka
Moriguchi-shi
Osaka 570-8677 (JP)

• HIRANUMA, Yoshinao
Moriguchi-shi
Osaka 570-8677 (JP)
• TERAUCHI, Tomoya
Moriguchi-shi
Osaka 570-8677 (JP)
• TANASE, Susumu
Moriguchi-shi
Osaka 570-8677 (JP)
• ABE, Takaaki
Moriguchi-shi
Osaka 570-8677 (JP)

(74) Representative: Glawe, Delfs, Moll
Patent- und Rechtsanwälte
Rothenbaumchaussee 58
20148 Hamburg (DE)

(54) **Projection display apparatus and image adjustment method**

(57)    A projection display apparatus includes; an element control unit (260) configured to control a light valve so as to display a test pattern image configuring at least one portion of a respective one of three or more line segments configuring three or more crossing points; an acquisition unit (230) configured to acquire a pickup image of the test pattern image outputted along a predetermined line from an image pickup element (300) configured to pick up the test pattern image projected on a projection plane; a computation unit (250) configured to specify three or more crossing points from three or more line segments included in the pickup image, based upon the pickup image acquired by the acquisition unit (230), and to compute a positional relationship between the projection image apparatus and the projection plane, based upon the three or more crossing points; and an adjustment unit (280) configured to adjust an image projected on the projection plane, based upon the positional relationship between the projection display apparatus and the projection plane. The three or more line segments have an inclination relative to the predetermined line.

FIG. 3

EP 2 282 547 A2

**Description**

CROSS REFERENCE TO RELATED APPLICATIONS

This application is based upon and claims the benefit of priority from prior Japanese Patent Application No.2009-179774, filed on July 31, 2009; and prior Japanese Patent Application No.2010-118460, filed on May 24, 2010; the entire contents of which are incorporated herein by reference.

BACKGROUND OF THE INVENTION

1. Field of the Invention

The present invention relates to a projection display apparatus having: a light valve configured to modulate light emitted from a light source; and a projection unit configured to project light emitted from the light valve on a projection plane. It also relates to an image adjustment method applied to the projection display apparatus.

2. Description of the Related Art

Conventionally, there has been known a projection display apparatus comprising: a light valve for modulating light emitted from a light source; and a projection unit for projecting light emitted from the light valve on a projection plane.
Here, the shape of an image projected on the projection plane is distorted depending upon a positional relationship between the projection display apparatus and the projection plane.
On the other hand, a method of adjusting the shape of an image in accordance with the following procedure is proposed (for example, Japanese Patent Application Publication No. 2005-318652). First, the projection display apparatus projects a rectangular test pattern image on a projection plane. Second, the projection display apparatus picks up the test pattern image projected on the projection plane and then specifies the coordinates at four corners of the test pattern image on the projection plane. Third, the projection display apparatus specifies a positional relationship between the projection display apparatus and the projection plane, based upon the coordinates at the four corners of the test pattern image on the projection plane, and then, adjusts the shape of the image projected on the projection plane.
Incidentally, an image pickup element for picking up a test pattern image is configured to output a pickup image along a predetermined line (for example, pixel array in a horizontal direction). The predetermined line is generally a line extending along a horizontal direction.
Here, in the above-described technique, a rectangular test pattern image is employed, and thus, among the four edges of the test pattern image, two edges are those extending along a horizontal direction. That is, among the four edges of the test pattern image, two edges are substantially parallel to the predetermined line.
Therefore, in the above-described technique, the projection display apparatus needs to specify the coordinates at the four edges or four corners of the test pattern image by performing edge detection or the like after acquiring all of pickup images from the image pickup element.
As just described, in the above-described technique, since edge detection or the like is performed after all of the pickup image have been acquired, a large number of pixels should be sampled, and a processing burden on specifying the coordinates on four corners of the test pattern image is large. That is, in the above-described technique, a processing burden on adjustment of the shape of an image is large.
It is an object of this invention to provide an improved projection display apparatus lessening this drawback.

SUMMARY OF THE INVENTION

The solution according to the invention resides in the features of the independent claims and preferably in those of the dependent claims.
A projection display apparatus according to a first aspect has an imager configured to modulate light emitted from a light source and a projection unit configured to project light emitted from the imager on a projection plane. The projection display apparatus includes: an element control unit configured to control the imager so as to display a test pattern image configuring at least one portion of a respective one of three or more line segments configuring three or more crossing points; an acquisition unit configured to acquire a pickup image of the test pattern image outputted along a predetermined line from an image pickup element configured to pick up the test pattern image projected on the projection plane; a computation unit configured to specify three or more crossing points from three or more line segments included in the pickup image, based upon the pickup image acquired by the acquisition unit, and to compute a positional relationship between the projection image apparatus and the projection plane, based upon the three or more crossing points; and an adjustment unit configured to adjust an image projected on the projection plane, based upon the positional relationship between the projection display apparatus and the projection plane. The three or more line segments have an inclination relative to the predetermined line.

In the first aspect, the predetermined line is a line extending along a horizontal direction.

In the first aspect, the element control unit controls the imager so as not to display an image, until a shape of an image projected on the projection plane is corrected, after three or more crossing points included in the pickup image are acquired.

In the first aspect, the element control unit controls the imager so as to display the test pattern image and a predetermined image other than the test pattern image.

In the first aspect, the image pickup element is disposed so that the three or more line segments have an inclination relative to the predetermined line.

In the first aspect, the adjustment unit includes a focus adjustment unit configured to adjust a focus of an image projected on the projection plane, the focus adjustment unit sequentially adjusts a focus in a respective one of a plurality of image regions divided so as to partially include the test pattern image. The computation unit specifies a line segment included in a part of the test pattern image, based upon a pickup image as a part of a test pattern image displayed in an image region in which a focus is adjusted.

The projection display apparatus according to the first aspect further includes an exposure control unit configured to sequentially adjust an exposure condition of the image pickup element in a respective one of the plurality of image regions divided so as to partially include the test pattern image. The computation unit specifies the line segment included in a part of the test pattern image, based upon a pickup image as a part of a test pattern image displayed in an image region in which exposure condition is adjusted.

The projection display apparatus according to the first aspect further includes a mode control unit configured to control a first processing mode and a second processing mode. The adjustment unit includes a focus adjustment unit configured to adjust a focus of the image projected on the projection plane. The first processing mode is a mode of specifying a line segment included in the test pattern image for an entirety of the test pattern image and computing a positional relationship between the projection display apparatus and the projection plane. The second processing mode is a mode of specifying a line segment included in the test pattern image for a respective one of a plurality of image regions divided so as to partially include the test pattern image and computing a positional relationship between the projection display apparatus and the projection plane. The mode control unit performs operation of the second processing mode, in a case where the positional relationship between the projection display apparatus and the projection plane is outside an allowable range, as a result obtained by performing operation of the first processing mode.

An image adjustment method according to second aspect is applied to a projection display apparatus having an imager configured to modulate light emitted from a light source, and a projection unit configured to project light emitted from the imager on a projection plane. The image adjustment method includes: step A of displaying a test pattern image configuring at least one portion of a respective one of three or more line segments configuring three or more crossing points; step B of picking up the test pattern image projected on the projection plane, and acquiring a pickup image of the test pattern image along a predetermined line having an inclination relative to the three or more line segments; step C of computing a positional relationship between the projection display apparatus and the projection plane, based upon the pickup image; and step D of adjusting an image projected on the projection plane, based upon the positional relationship between the projection display apparatus and the projection plane.

BRIEF DESCRIPTION OF THE DRAWINGS

Fig. 1 is a view showing an overview of a projection display apparatus 100 according to a first embodiment;
Fig. 2 is a view showing a configuration of the projection display apparatus 100 according to the first embodiment;
Fig. 3 is a block diagram depicting a control unit 200 according to the first embodiment;
Fig. 4 is a view showing an example of a storage test pattern image according to the first embodiment;
Fig. 5 is a view showing another example of a storage test pattern image according to the first embodiment;
Fig. 6 is a view showing still another example of the storage test pattern image according to the first embodiment;
Fig. 7 is a view showing yet another example of the storage test pattern image according to the first embodiment;
Fig. 8 is a view showing a further example of the storage test pattern image according to the first embodiment;
Fig. 9 is a view showing a furthermore example of the storage test pattern image according to the first embodiment;
Fig. 10 is a view for explaining a method of computing a crossing point included in a projection test pattern image according to the first embodiment;
Fig. 11 is a flowchart illustrating an operation of the projection display apparatus 100 according to the first embodiment;
Fig. 12 is another flowchart illustrating the operation of the projection display apparatus 100 according to the first embodiment;

Fig. 13 is a view for explaining a divisional processing mode according to exemplary modification 1;

Fig. 14 is another view for explaining the divisional processing mode according to exemplary modification 1;

Fig. 15 is a flowchart illustrating an operation of a projection display apparatus 100 according to exemplary modification 1;

Fig. 16 is another flowchart illustrating the operation of a projection display apparatus 100 according to exemplary modification 1;

Fig. 17 is a view showing a configuration of a projection display apparatus 100 according to exemplary modification 2;

Fig. 18 is a view for explaining a divisional processing mode according to exemplary modification 2;

Fig. 19 is another view for explaining the divisional processing mode according to exemplary modification 2;

Fig. 20 is a flowchart illustrating an operation of a projection display apparatus 100 according to exemplary modification 2;

Fig. 21 is a view showing a configuration of the projection display apparatus 100 according to exemplary modification 3;

Fig. 22 is a flowchart illustrating the operation of the projection display apparatus 100 according to exemplary modification 3;

Fig. 23 is a view for explaining a layout of an image pickup element 300 according to exemplary modification 4;

Fig. 24 is a view for explaining another layout of the image pickup element 300 according to exemplary modification 4; and

Fig. 25 is a view for explaining still another layout of the image pickup element 300 according to exemplary modification 4.

## DETAILED DESCRIPTION OF THE EMBODIMENTS

Hereinafter, a projection display apparatus according to the embodiments of the present invention will be described with reference to the drawings. In the following description of the drawings, the same or similar constituent elements are designated by the same or similar reference numerals.

It should be noted that the drawings are schematic and ratios of dimensions and the like are different from actual ones. Therefore, specific dimensions and the like should be determined in consideration of the following description. Moreover, as a matter of course, the drawings also include portions having different dimensional relationships and ratios from each other.

[Overview of Embodiments]

A projection display apparatus according to the embodiments has an imager configured to modulate light emitted from a light source and a projection unit configured to project light emitted from the imager on a projection plane. The projection display apparatus comprises: an element control unit for controlling an imager so as to display a test pattern image configuring at least one portion of three or more line segments configuring three or more crossing points; an acquisition unit for acquiring a pickup image of the test pattern image that is outputted along a predetermined line from an image pickup element for picking up the test pattern image projected on a projection plane; a computation unit for specifying three or more crossing points from three or more line segments included in the pickup image, and then, based upon the three or more crossing points, computing a positional relationship between the projection display apparatus and the projection plane; and an adjustment unit for adjusting an image projected on the projection plane, based upon the positional relationship between the projection display apparatus and the projection plane. The three or more line segments have an inclination relative to the predetermined line.

In the embodiments, three or more line segments included in the test pattern image have an inclination relative to the predetermined line. First, the number of pixels to be sampled to perform edge detection or the like can be reduced in comparison with a case in which the line segments included in the test pattern image are taken along the predetermined line. Therefore, a processing burden on image adjustment can be reduced. Second, detection precision of the line segments included in the test pattern image is improved in comparison with the case in which the line segments included in the test pattern image are taken along the predetermined line.

The projection display apparatus may have a specifying unit for specifying three or more line segments included in the pickup image, based upon the pickup image acquired by the acquisition unit, and specifying three or more crossing points included in the pickup image, based upon the three or more line segments included in the pickup image. The computation unit computes a positional relationship between the projection display apparatus and the projection plane, based upon the three or more crossing points included in the test pattern image and the three or more crossing points included in the pickup image.

[First Embodiment]

(Overview of Projection Display Apparatus)

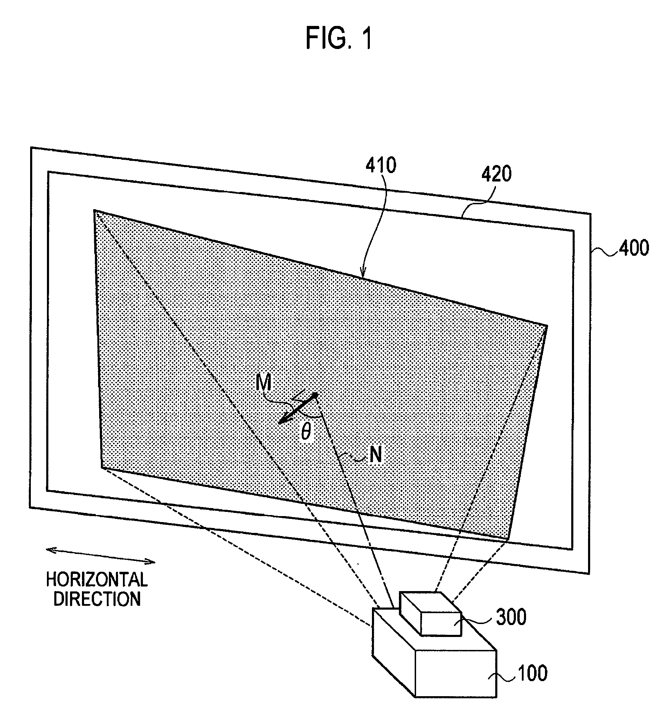

Hereinafter, a projection display apparatus according to a first embodiment will be described with reference to the drawings. Fig. 1 is a view showing an overview of a projection display apparatus 100 according to the first embodiment.

As shown in Fig. 1, an image pickup element 300 is provided in the projection display apparatus 100. In addition, the projection display apparatus 100 projects image light on a projection plane 400.

The image pickup element 300 is configured to pickup an image on the projection plane 400. That is, the image pickup element 300 is configured to detect reflection light of the image light projected on the projection plane 400 by means of the projection display apparatus 100. The image pickup element 300 outputs a pickup image to the projection display apparatus 100 along a predetermined line. The image pickup element 300 may be incorporated in the projection display apparatus 100 or may be provided together with the projection display apparatus 100.

The projection plane 400 is comprised of a screen or the like. A range in which the projection display apparatus 100 can project image light (projection-enable range 410) is formed on the projection plane 400. In addition, the projection plane 400 has a display frame 420 which is comprised of an outer frame of the screen.

In the first embodiment, there is illustrated a case in which an optical axis N of the projection display apparatus 100 does not coincide with a normal line M of the projection plane 400. For example, there is illustrated a case in which the optical axis N and the normal line M form an angle θ.

That is, in the first embodiment, since the optical axis N does not coincide with the normal line M, the projection-enable range 410 (image displayed on the projection plane 400) is distorted. The first embodiment mainly describes a method of correcting such distortion of the projection-enable range 410.

(Configuration of Projection Display Apparatus)

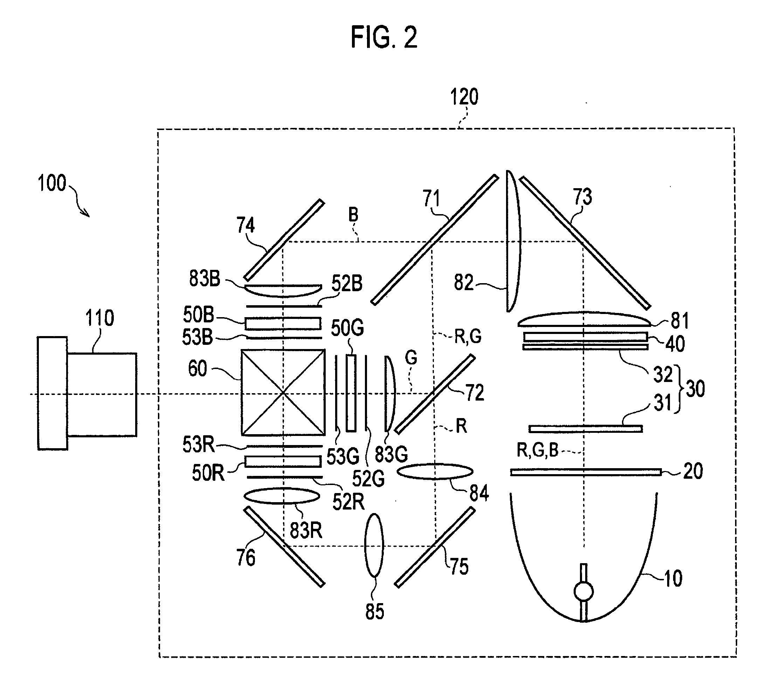

Hereinafter, the projection display apparatus according to the first embodiment will be described with reference to the drawings. Fig. 2 is a view showing a configuration of a projection display apparatus 100 according to the first embodiment.

As shown in Fig. 2, the projection display apparatus 100 has a projection unit 110 and an illumination system 120.

The projection unit 110 projects the image light emitted from the illumination system 120, on a projection plane (not shown) or the like.

First, the illumination system 120 has: a light source 10; an ultraviolet/infrared-ray (UV/IR) cutting filter 20; a fly-eye lens unit 30; a Polarizing Beam Splitter (PBS) array 40; a plurality of liquid crystal panels 50 (liquid crystal panel 50R, liquid crystal panel 50G, and liquid crystal panel 50B); and a cross-dichroic prism 60.

The light source 10 is a light source emitting incandescent light or the like (for example, UHP lamp or xenon lamp). That is, the incandescent light emitted from the light source 10 includes red component light R, green component light G, and blue component light B.

The UV/IR cutting filter 20 transmits visible light components (red component light R, green component light G, and blue component light B). The UV/IR cutting filter 20 interrupts an infrared-ray component or an ultraviolet-ray component.

The fly-eye lens unit 30 uniformizes light emitting the light source 10. Specifically, the fly-eye lens unit 30 is comprised of a flay-eye lens 31 and a fly-eye lens 32. The fly-eye lens 31 and the fly-eye lens 32 are comprised of a plurality of micro-lenses, respectively. A respective one of the micro-lenses focuses the light emitted from the light source 10 so that the light emitted from the light source 10 is irradiated all over the liquid crystal panel 50.

The PBS array 40 coordinates a polarization state of the light emitted from the fly-eye lens unit 30. The PBS array 40 coordinates the light emitted from the fly-eye lens unit 30 with S polarization (or P polarization), for example.

The liquid crystal panel 50R modulates red component light R, based upon a red output signal $R_{out}$. An incidence-side polarization plate 52R for transmitting light having one polarization direction (for example, S-polarization) and interrupting light having the other polarization direction (for example, P-polarization) is provided on the side on which light is incident to the liquid crystal panel 50R. An emission-side polarization plate 53R for interrupting light having one polarization direction (for example, S-polarization) and transmitting light having the other polarization direction (for example, P-polarization) is provided on the side on which light is emitted from the liquid crystal panel 50R.

The liquid crystal panel 50G modulates green component light G, based upon a green output signal $G_{out}$. An incidence-side polarization plate 52G for transmitting light having one polarization direction (for example, S-polarization) and interrupting light having the other polarization direction (for example, P-polarization) is provided on the side on which light is incident to the liquid crystal panel 50G. On the other hand, an emission-side polarization plate 53G for interrupting light having one polarization direction (for example, S-polarization) and transmitting light having the other polarization direction (for example, P-polarization) is provided on the side on which light is emitted from the liquid crystal panel 50G.

The liquid crystal panel 50B modulates blue component light B, based upon a blue output signal $B_{out}$. An incidence-side polarization plate 52B for transmitting light having one polarization direction (for example, S-polarization) and interrupting light having the other polarization direction (for example, P-polarization) is provided on the side on which light is incident to the liquid crystal panel 50B. On the other hand, an emission-side polarization plate 53B for interrupting light having one polarization direction (for example, S-polarization) and transmitting light having the other polarization direction (for example, P-polarization) is provided on the side on which light is emitted from the liquid crystal panel 50B.

The red output signal $R_{out}$, the green output signal $G_{out}$, and the blue output signal $B_{out}$ form an image output signal. The image output signal is a signal to be outputted in a respective one of a plurality of pixels forming one frame.

Here, a compensation plate (not shown) for improving a contrast ratio or a transmission ratio may be provided on a respective one of the liquid crystal panels 50. In addition, a respective one of the polarization plates may have a pre-polarization plate for reducing light amounts of the light incident to the polarization plate or a thermal load.

The cross-dichroic prism 60 configures a color combining unit for combining the light emitted from the liquid crystal panel 50R, the liquid crystal panel 50G, and the liquid crystal panel 50B with each other. The combined light emitted from the cross-dichroic prism 60 is guided to a projection unit 110.

Second, the illumination system 120 has a mirror group (mirror 71 to mirror 76) and a lens group (lens 81 to lens 85).

The mirror 71 is a dichroic mirror for transmitting blue component light B and reflecting red component light R and green component light G. The mirror 72 is a dichroic mirror for transmitting the red component light R and reflecting the green component light G. The mirror 71 and the mirror 72 configure a color separation unit for separating the red component light R, the green component light G, and the blue component light B from each other.

The mirror 73 reflects red component light R, green component light G, and blue component light B and then guides the red component light R, the green component light G, and the blue component light B to the side of the mirror 71. The mirror 74 reflects the blue component light B and then guides the blue component light B to the side of the liquid crystal panel 50B. The mirror 75 and the mirror 76 reflect the red component light R and then guide the red component light R to the side of the liquid crystal panel 50R.

A lens 81 is a condenser lens for focusing the light emitted from the PBS array 40. A lens 82 is a condenser lens for focusing the light reflected by the mirror 73.

A lens 83R substantially collimates the red component light R so that the liquid crystal panel 50R is irradiated with the red component light R. A lens 83G substantially collimates the green component light G so that the liquid crystal panel 50G is irradiated with the green component light G. A lens 83B substantially collimates the blue component light B so that the liquid crystal panel 50B is irradiated with the blue component light B.

A lens 84 and a lens 85 are relay lenses for substantially forming an image with the red component light R on the liquid crystal panel 50R while restraining expansion of the red component light R.

(Configuration of Control Unit)

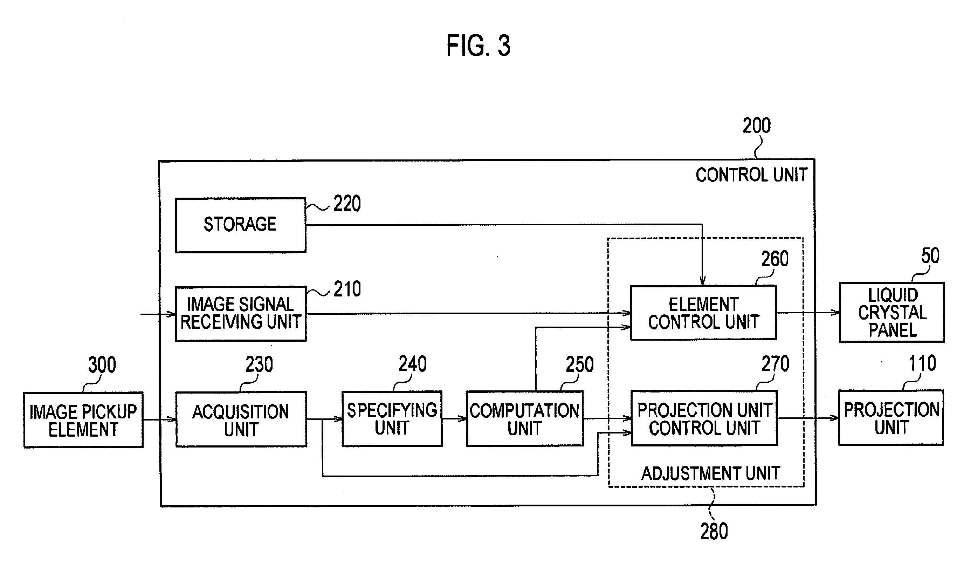

Hereinafter, a control unit according to the first embodiment will be described with reference to the drawings. Fig. 3 is a block diagram depicting a control unit 200 according to the first embodiment. The control unit 200 is provided in the projection display apparatus 100 and controls the projection display apparatus 100.

The control unit 200 converts an image input signal to an image output signal. The image input signal is comprised of a red input signal $R_{in}$, a green input signal $G_{in}$, and a blue input signal $B_{in}$. The image output signal is comprised of a red output signal $R_{out}$, a green output signal $G_{out}$, and a blue output signal $B_{out}$. The image input signal and the image output signal are signals, each of which is to be inputted by a respective one of a plurality of pixels configuring one frame.

As shown in Fig. 3, the control unit 200 has: an image signal receiving unit 210; a storage 220; an acquisition unit 230; a specifying unit 240; a computation unit 250; an element control unit 260; and a projection unit control unit 270.

The image signal receiving unit 210 receives an image input signal from an external device (not shown) such as a DVD or a TV tuner.

The storage 220 stores a variety of information. Specifically, the storage 220 stores: a frame detection pattern image employed to detect a display frame 420; a focus adjustment image employed to adjust a focus; and a test pattern image employed to compute a positional relationship between the projection display apparatus 100 and the projection plane 400. Alternatively, the storage 220 may store an exposure adjustment image employed to adjust an exposure value.

A test pattern image is an image configuring at least one portion of a respective one of three or more line segments configuring three or more crossing points. In addition, the three or more line segments have an inclination relative to a predetermined line.

The image pickup element 300 outputs a pickup image along the predetermined line, as described above. The predetermined line is a pixel array in a horizontal direction, and the orientation of the predetermined line is in the horizontal direction, for example.

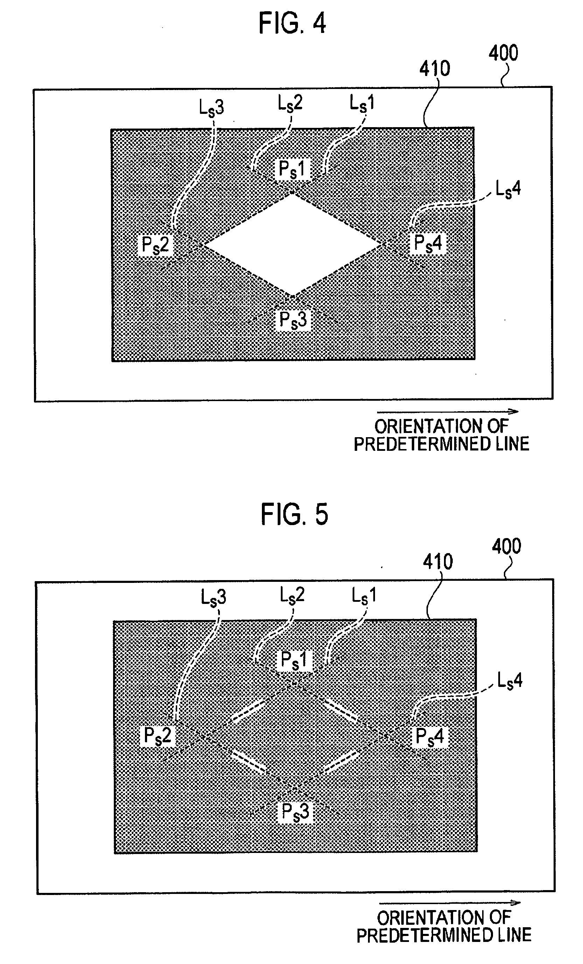

Hereinafter, one example of the test pattern image will be described with reference to Fig. 4 to Fig. 7. As shown in Fig. 4 to Fig. 7, the test pattern image is an image configuring at least one portion of four line segments ($L_s1$ to $L_s4$) configuring four crossing points ($P_s1$ to $P_s4$). In the first embodiment, the four line segments ($L_s1$ to $L_s4$) are represented by a difference in shading or contrast (edge).

In detail, as shown in Fig. 4, the test pattern image may be a black background and an open rhombus. Here, the four edges of the open rhombus configure at least one of four line segments ($L_s1$ to $L_s4$). The four line segments ($L_s1$ to $L_s4$) have an inclination relative to the predetermined line (horizontal direction).

Alternatively, as shown in Fig. 5, the test pattern image may be a black background and open line segments. The open line segments configure one portion of the four edges of the open rhombus shown in Fig. 4. Here, the open line segments configure at least one of four line segments ($L_s1$ to $L_s4$). The four line segments ($L_s1$ to $L_s4$) have an inclination relative to the predetermined line (horizontal direction).

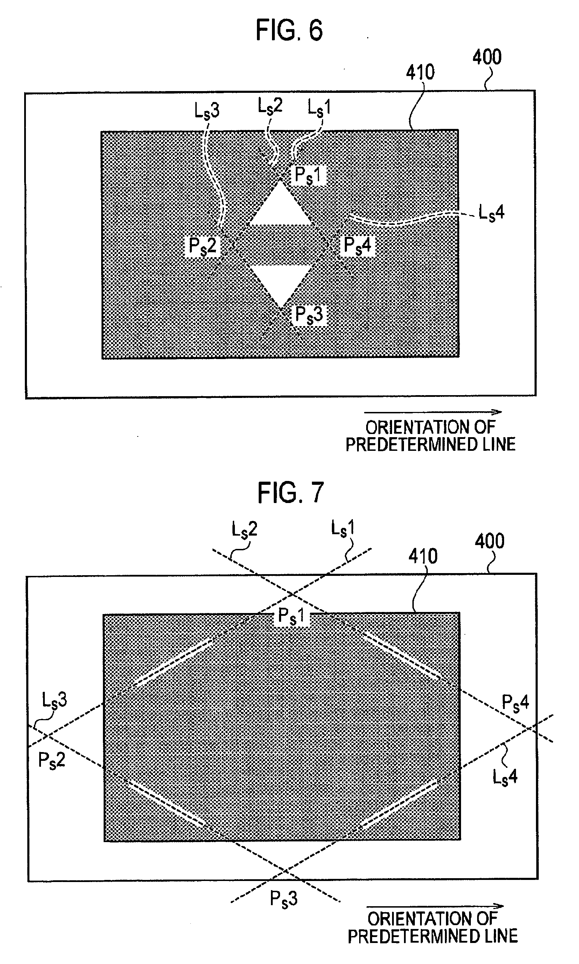

Alternatively, as shown in Fig. 6, the test pattern image may be a black background and one pair of open triangles. Here, two edges of one pair of the open triangles configure at least one portion of the four line segments ($L_s1$ o $L_s4$). The four line segments ($L_s1$ to $L_s4$) have an inclination relative to the predetermined line (horizontal direction).

Alternatively, as shown in Fig. 7, the test pattern image may be a black background and open line segments. Here, the open line segments configure at least one portion of four line segments ($L_s1$ to $L_s4$). As shown in Fig. 7, four crossing points ($P_s1$ to $P_s4$) comprised of four line segments ($L_s1$ to $L_s4$) may be provided outside a projection-enable range 410. The four line segments ($L_s1$ to $L_s4$) have an inclination relative to the predetermined line (horizontal direction).

The acquisition unit 230 acquires a pickup image outputted from the image pickup element 300 along the predetermined line. The acquisition unit 230 acquires a pickup image of a frame detection pattern image outputted from the image pickup element 300 along the predetermined line, for example. The acquisition unit 230 acquires a pickup image of a focus adjustment image outputted from the image pickup element 300 along the predetermined line. The acquisition unit 230 acquires a pickup image of a test pattern image outputted from the image pickup element 300 along the predetermined line. Alternatively, the acquisition unit 230 may acquire a pickup image of an exposure adjustment image outputted from the image pickup element 300 along the predetermined line.

The specifying unit 240 specifies three line segments included in a pickup image, based upon the pickup image acquired by means of the acquisition unit 230 on the predetermined-line-by-line basis. Subsequently, the specifying unit 240 acquires three or more crossing points included in the pickup image, based upon the three line segments included in the pickup image.

Specifically, the specifying unit 240 acquires three or more crossing points included in the pickup image, in accordance with the procedure explained below. Here is illustrated a case in which a test pattern image is an image (open rhombus) shown in Fig. 4.

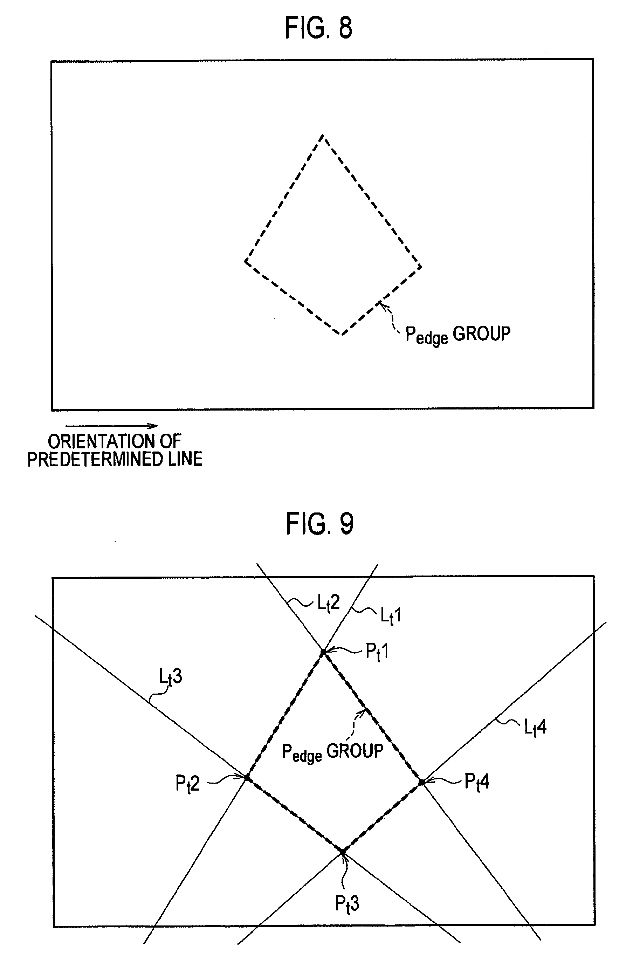

First, the specifying unit 240, as shown in Fig. 8, acquires a point group $P_{edge}$ having a difference in shading or contrast (edge), based upon the pickup image acquired by means of the acquisition unit 230 on the predetermined-line-by-line basis. That is, the specifying unit 240 specifies the point group $P_{edge}$ corresponding to the four edges of an open rhombus of the test pattern image.

Second, the specifying unit 240, as shown in Fig. 9, specifies four line segments ($L_t1$ to $L_t4$) included in a pickup image, based upon the point group $P_{edge}$. That is, the specifying unit 240 specifies the four line segments ($L_t1$ to $L_t4$) corresponding to the four line segments ($L_s1$ to $L_s4$) included in the test pattern image.

Third, the specifying unit 240, as shown in Fig. 9, specifies four crossing points ($P_t1$ to $P_t4$) included in the pickup image, based upon the four line segments ($L_t1$ to $L_s4$). That is, the specifying unit 240 specifies the four crossing points ($P_s1$ to $P_s4$) corresponding to the four crossing points ($P_s1$ to $P_s4$) included in the test pattern image.

The computation unit 250 computes a positional relationship between the projection display apparatus 100 and the projection plane 400, based upon: the three or more crossing points (for example, $P_s1$ to $P_s4$) included in the test pattern image; and the three crossing points (for example, $P_t1$ to $P_t4$) included in the pickup image. Specifically, the computation unit 250 computes a shift length between an optical axis N of the projection display apparatus 100 (projection unit 110) and a normal line M of the projection plane 400.

Hereinafter, the test pattern image stored in the storage 220 is referred to as a storage test pattern image. The test pattern image included in the pickup image is referred to as an image pickup test pattern image. The test pattern image projected on the projection plane 400 is referred to as a projection test pattern image.

First, the computation unit 250 computes the coordinates of the four crossing points ($P_u1$ to $P_u4$) included in a projection test pattern image. The crossing point $P_s1$ of a storage test pattern image, the crossing point $P_t1$ of an image pickup test pattern image, and the crossing point $P_u1$ of a projection test pattern image will be described by way of example. The crossing point $P_s1$, the crossing point $P_t1$, and the crossing point $P_u1$ are crossing points corresponding to each other.

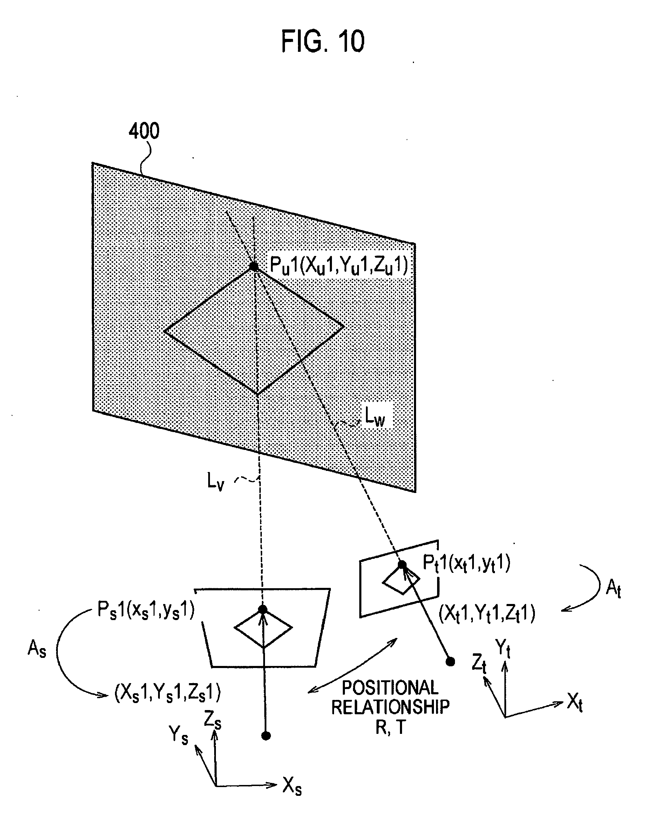

Hereinafter, a method of computing the coordinate ($X_u1$, $Y_u1$, $Z_u1$) of the crossing point $P_u1$ will be described with reference to Fig. 10. It should be noted that the coordinate ($X_u1$, $Y_u1$, $Z_u1$) of the crossing point $P_u1$ is a coordinate in a three-dimensional space in which a focal point $O_s$ of the projection display apparatus 100 is an origin.

(1) The computation unit 250 converts the coordinate $(x_s1, y_s1)$ of the crossing point Ps1 on a two-dimensional plane of a storage test pattern image to the coordinate $(X_s1, Y_s1, Z_s1)$ of the crossing point $P_s1$ in a three-dimensional space in which the focal point $O_s$ of the projection display apparatus 100 is an origin. Specifically, the coordinate $(X_s1, Y_s1, Z_s1)$ of the crossing point $P_s1$ is represented by the formula below.

## [Mathematical Formula 1]

$$\begin{pmatrix} X_s1 \\ Y_s1 \\ Z_s1 \end{pmatrix} = As \begin{pmatrix} x_s1 \\ y_s1 \\ 1 \end{pmatrix} \qquad \text{.. Formula (1)}$$

In the formula, $A_s$ is a 3x3 conversion matrix, and can be acquired in advance by means of preprocessing such as calibration. That is, $A_s$ is a known parameter.

Here, planes perpendicular to an optical-axis direction of the projection display apparatus 100 are represented by an $X_s$-axis and a $Y_s$-axis, and an optical-axis direction of the projection display apparatus 100 is represented by a $Z_s$-axis.

Similarly, the computation unit 250 converts the coordinate $(x_t1, y_t1)$ of the crossing point $P_t1$ in the two-dimensional plane of an image pickup test pattern image to the coordinate $(X_t1, Y_t1, Z_t1)$ of the crossing point $P_t1$ in the three-dimensional space in which a focal point Ot of the image pickup element 300 is an origin.

## [Mathematical Formula 2]

$$\begin{pmatrix} X_t1 \\ Y_t1 \\ Z_t1 \end{pmatrix} = At \begin{pmatrix} x_t1 \\ y_t1 \\ 1 \end{pmatrix} \qquad \text{... Formula (2)}$$

In the formula, $A_t$ is a 3x3 conversion matrix, and can be acquired in advance by means of preprocessing such as calibration. That is, $A_t$ is a known parameter.

Here, planes perpendicular to the optical-axis direction of the image pickup element 300 are represented by an $X_t$-axis and a $Y_t$-axis, and the orientation (image pickup direction) of the image pickup element 300 is represented by a $Z_t$-axis. In such a coordinate space, it should be noted that an inclination (vector) of the orientation (image pickup direction) of the image pickup element 300 is known.

(2) The computation unit 250 computes a formula of a straight line $L_v$ connecting the crossing point $P_s1$ and the crossing point $P_u1$ with each other. Similarly, the computation unit 250 computes a formula of a straight line $L_w$ connecting the crossing point $P_t1$ and the crossing point $P_u1$ with each other. The formulas of the straight line $L_v$ and the straight line $L_w$ are represented as follows.

## [Mathematical Formula 3]

$$L_v = \begin{pmatrix} x_s \\ y_s \\ z_s \end{pmatrix} = K_s \begin{pmatrix} X_s1 \\ Y_s1 \\ Z_s1 \end{pmatrix} \qquad \text{... Formula (3)}$$

$$L_w = \begin{pmatrix} x_t \\ y_t \\ z_t \end{pmatrix} = K_t \begin{pmatrix} X_t1 \\ Y_t1 \\ Z_t1 \end{pmatrix} \qquad \text{... Formula (4)}$$

In the formulas, $K_s$ and $K_t$ are parameters.

(3) The computation unit 250 converts the straight line $L_w$ to the straight line $L_w'$ in the three-dimensional space in which the focal point $O_s$ of the projection display apparatus 100 is defined as an origin. The straight line $L_w$, is

represented by the formula below.

**[Mathematical Formula 4]**

$$L_w' = \begin{pmatrix} x_t' \\ y_t' \\ z_t' \end{pmatrix} = K_t R \begin{pmatrix} X_t 1 \\ Y_t 1 \\ Z_t 1 \end{pmatrix} + T \qquad \dots \text{Formula (5)}$$

In the formula, the optical axis of the projection display apparatus 100 and the orientation (image pickup direction) of the image pickup element 300 are known; and therefore, a parameter R indicating a rotational component is known. Similarly, since relative positions of the projection display apparatus 100 and the image pickup element 300 are known, a parameter T indicating a translational component is also known.

(4) The computation unit 250 computes parameters $K_s$ and $K_t$ at a crossing point (i.e., crossing point $P_u 1$) of the straight line $L_v$ and the straight line $L_{w'}$, based upon formula (3) and formula (5). Subsequently, the computation unit 250 computes the coordinate values of the coordinate $(X_u 1, Y_u 1, Z_u 1)$ of the crossing point $P_u 1$, based upon the coordinate $(X_s 1, Y_s 1, Z_s 1)$ of the crossing point $P_s 1$ and the parameter $K_s$. Alternatively, the computation unit 250 computes the coordinate values of the coordinate $(X_u 1, Y_u 1, Z_u 1)$ of the crossing point $P_u 1$, based upon the coordinate $(X_t 1, Y_t 1, Z_t 1)$ of the crossing point $P_t 1$ and $K_t$.

In this manner, the computation unit 250 computes the coordinates $(X_u 1, Y_u 1, Z_u 1)$ of the crossing point $P_u 1$. Similarly, the computation unit 250 computes the coordinates $(X_u 2, Y_u 2, Z_u 2)$ of the crossing point $P_u 2$, the coordinates $(X_u 3, Y_u 3, Z_u 3)$ of the crossing point $P_u 3$, and the coordinates $(X_u 4, Y_u 4, Z_u 4)$ of the crossing point $P_u 4$.

Second, the computation unit 250 computes a vector of the normal line M of the projection plane 400. Specifically, the computation unit 250 computes a vector of the normal line M of the projection plane 400 by employing the coordinates of at least three crossing points, of crossing point $P_u 1$ to crossing point $P_u 4$. The formula of the projection plane 400 is represented as follows, where parameters $k_1$, $k_2$, $k_3$ represents vectors of the normal line M of the projection plane 400.

**[Mathematical Formula 5]**

$$k_1 x + k_2 y + k_3 z + k_4 = 0 \qquad \dots \text{Formula (6)}$$

In the formula, $k_1, k_2, k_3, k_4$ are predetermined coefficients.

In this manner, the computation unit 250 can compute a shift length between the optical axis N of the projection display apparatus 100 and the normal line M of the projection plane 400. That is, the computation unit 250 can compute a positional relationship between the projection display apparatus 100 and the projection plane 400.

While the first embodiment described the specifying unit 240 and the computation unit 250 separately, the specifying unit 240 and the computation unit 250 may be considered as one constituent element. For example, the computation unit 250 may have the function of the specifying unit 240.

Turning to Fig. 3, the element control unit 260 converts an image input signal to an image output signal and then controls a liquid crystal panel 50, based upon the converted image output signal. In addition, the element control unit 260 has its own function shown below.

Specifically, the element control unit 260 has a (shape adjustment) function of performing automatic correction of the shape of an image projected on the projection plane 400, based upon a positional relationship between the projection display apparatus 100 and the projection plane 400. That is, the element control unit 260 has a function of automatically performing trapezoidal correction, based upon a positional relationship between the projection display apparatus 100 and the projection plane 400.

The projection unit adjustment unit 270 controls a lens group provided in the projection unit 110. First, the projection unit adjustment unit 270 includes the projection-enable range 410 in the display frame 420 provided on the projection plane 400, by shifting the lens group provided in the projection unit 110 (zoom adjustment). Specifically, the projection unit adjustment unit 270 controls the lens group provided in the projection unit 110 so that the projection-enable range 410 is included in the display frame 420, based upon a pickup image of a frame detection pattern image acquired by the acquisition unit 230.

Second, the projection unit adjustment unit 270 adjusts a focus of an image projected on the projection plane 400, by shifting the lens group provided in the projection unit 110 (focus adjustment). Specifically, the projection unit adjustment unit 270 controls the lens group provided in the projection unit 110 so that a focus value of the image projected on the projection plane 400 is at its maximum value, based upon the pickup image of a focus adjustment image acquired by the acquisition unit 230.

The element control unit 260 and the projection unit adjustment unit 270 configure an adjustment unit 280 for adjusting an image projected on the projection plane 400.

In the first embodiment, the projection display apparatus 100 projects the frame detection pattern image on the projection plane 400 to thereby detect the display frame 420 provided on the projection plane 400. Subsequently, the projection display apparatus 100 projects the focus adjustment image on the projection plane 400 and then adjusts a focus of the image projected on the projection plane 400 for the entirety of the image (test pattern image) projected on the projection plane 400. Subsequently, the projection display apparatus 100 projects the test pattern image on the projection plane 400 and then computes a positional relationship between the projection display apparatus 100 and the projection plane 400. Subsequently, the projection display apparatus 100 adjusts the shape of the image projected on the projection plane 400, based upon the positional relationship between the projection display apparatus 100 and the projection plane 400.

In the first embodiment, the projection display apparatus 100 specifies line segments included in the test pattern image for the entirety of the test pattern image and then computes the positional relationship between the projection display apparatus 100 and the projection plane 400 (batch processing mode (first processing mode)). That is, in the batch processing mode, the image pickup element 300 picks up the entirety of the test pattern image while a focus is adjusted for the entirety of the projection-enable range 410, and then, the projection display apparatus 100 specifies three or more line segments included in the test pattern, based upon the pickup image of the entirety of the test pattern image.

(Operation of Projection Display Apparatus)

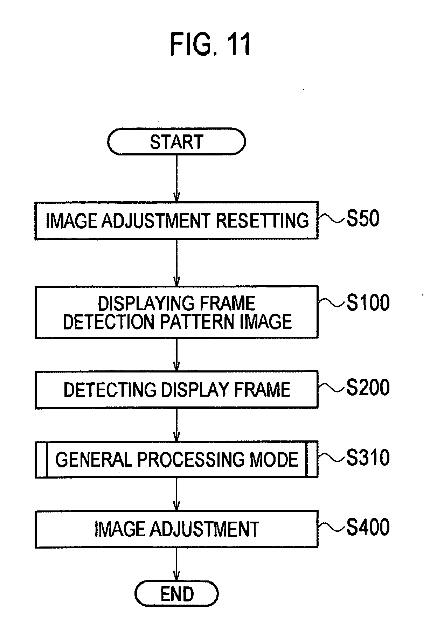

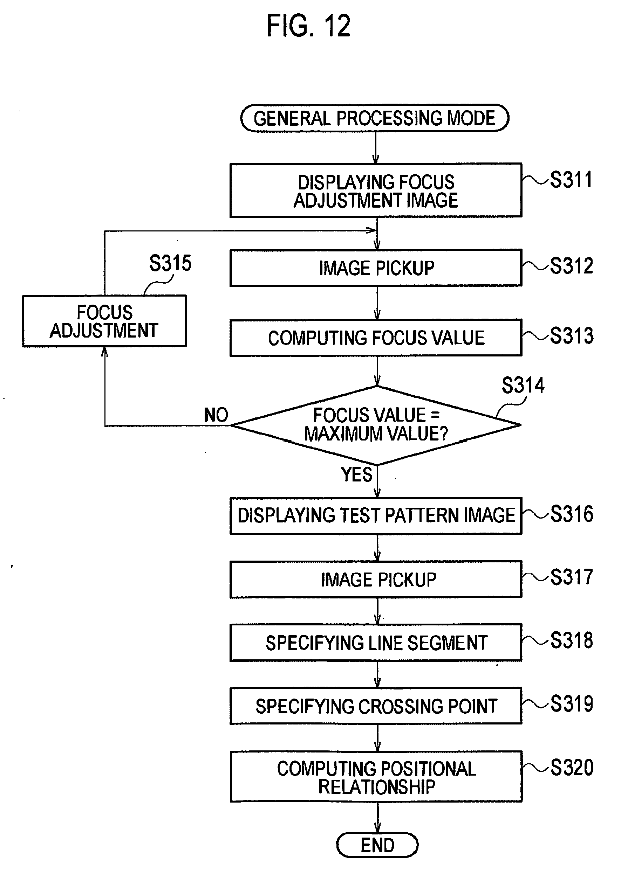

Hereinafter, an operation of a projection display apparatus (control unit) according to the first embodiment will be described with reference to the drawings. Fig. 11 and Fig. 12 are flowcharts showing an operation of a projection display apparatus 100 (control unit 200) according to the first embodiment.

As shown in Fig. 11, in step 50, the projection display apparatus 100 performs image adjustment resetting processing. Specifically, the projection display apparatus 100 resets parameters for shape adjustment, zoom adjustment, or focus adjustment and the like (for example, preset parameters) to initial parameters.

It is preferable that, in image adjustment resetting processing, the projection display apparatus 100 does not display an image on the projection plane 400, from the start of the flowchart shown in Fig. 11 until image adjustment resetting processing (resetting of various parameters) is performed, in order to disallow a user to visually recognize a change in the shape of an image on the projection plane 400.

In step 100, the projection display apparatus 100 displays (projects) a frame detection pattern image on the projection plane 400. The frame detection pattern image is a white image or the like, for example.

In step 200, the image pickup element 300 provided in the projection display apparatus 100 picks up an image on the projection plane 400. That is, the image pickup element 300 picks up the frame detection pattern image projected on the projection plane 400. Subsequently, the projection display apparatus 100 detects a display frame 420 provided on the projection plane 400, based upon the pickup image of the frame detection pattern image.

In step 310, the projection display apparatus 100 specifies line segments included in the test pattern image for the entirety of the test pattern image and then computes a positional relationship between the projection display apparatus 100 and the projection plane 400 (batch processing mode). A detailed description of the batch processing mode will be given later (see Fig. 12).

In step 400, the projection display apparatus 100 adjusts the shape of the image projected on the projection plane 400, based upon a positional relationship between the projection display apparatus 100 and the projection plane 400(trapezoidal correction).

As shown in Fig. 12, in step S311, the projection display apparatus 100 displays (projects) a focus adjustment image on the projection plane 400. The focus adjustment image is an image or the like on which white stripes and black stripes are alternately disposed, for example.

In step 312, the image pickup element 300 provided in the projection display apparatus 100 picks up an image on the projection plane 400. That is, the image pickup element 300 picks up the focus adjustment image projected on the projection plane 400.

In step 313, the projection display apparatus 100 computes a focus value of the focus adjustment image that is projected on the projection plane 400.

In step 314, the projection display apparatus 100 determines whether or not the focus value of the focus adjustment image is at its maximum value, for the entirety of the focus adjustment image. The projection display apparatus 100 migrates to the processing of step 316 in a case where the focus value is at its maximum value. The projection apparatus 100 migrates to the processing of step 315 in a case where the focus value is not at its maximum value.

In step 315, the projection display apparatus 100 adjusts a focus of the focus adjustment image projected on the projection plane 400 for the entirety of the projection-enable range 410. Specifically, the projection display apparatus 100 shifts the lens group provided in the projection unit 110, based upon the pickup image of the focus adjustment image.

That is, the projection display apparatus 100 adjusts a focus of the focus adjustment image so that the focus value is at its maximum value for the entirety of the focus adjustment image, in accordance with loop processing of step 312 to step 315.

In step 316, the projection display apparatus 100 displays (projects) a test pattern image on the projection plane 400.

In step 317, the image pickup element 300 provided in the projection display apparatus 100 picks up an image on the projection plane 400. That is, the image pickup element 300 picks up the test pattern image projected on the projection plane 400.

In step 318, the projection display apparatus 100 specifies four line segments ($L_t1$ to $L_t4$) included in the pickup test pattern image, for the entirety of the pickup test pattern image.

In step 319, the projection display apparatus 100 specifies four crossing points ($P_t1$ to $P_t4$) included in the pickup test pattern image, based upon four line segments ($L_t1$ to $Lt4$).

In step 320, the projection display apparatus 100 computes a positional relationship between the projection display apparatus 100 and the projection plane 400, based upon the four crossing points ($P_s1$ to $P_s4$) included in the storage test pattern image and the four crossing points ($P_t1$ to $P_t4$) included in the pickup test pattern image.

(Function(s) and Advantageous Effect(s))

In the first embodiment, three or more line segments included in the test pattern image have an inclination relative to a predetermined line. First, the number of pixels to be sampled to perform edge detection or the like can be reduced in comparison a case in which the line segments included in the test pattern image are taken along the predetermined line. Therefore, a processing burden on image adjustment can be reduced. Second, detection precision of the line segments included in the test pattern image is improved in comparison with a case in which the line segments included in the test pattern image are taken along the predetermined line.

[Exemplary Modification 1]

Hereinafter, exemplary modification 1 of the first embodiment will be described with reference to the drawings. Hereinafter, differences from the first embodiment will be mainly described.

Specifically, in the first embodiment, the projection display apparatus 100 specifies line segments included in a test pattern image, for the entirety of the test pattern image, and then, computes a positional relationship between the projection display apparatus 100 and the projection plane 400 (batch processing mode).

In contrast to this, in exemplary modification 1, the projection display apparatus 100 specifies line segments included in a test pattern image, for a respective one of a plurality of image regions divided so as to partially include the test pattern image, and then, computes a positional relationship between the projection display apparatus 100 and the projection plane 400 (divisional processing mode (second processing mode)). That is, in the divisional processing mode, the image pickup element 300 picks up a test pattern image in a respective one of a plurality of image regions, in a state in which a focus is adjusted by the plurality of image regions, and then, the projection display apparatus 100 specifies three or more line segments included in the test pattern image, based upon a pickup image of the test pattern image in the plurality of image regions.

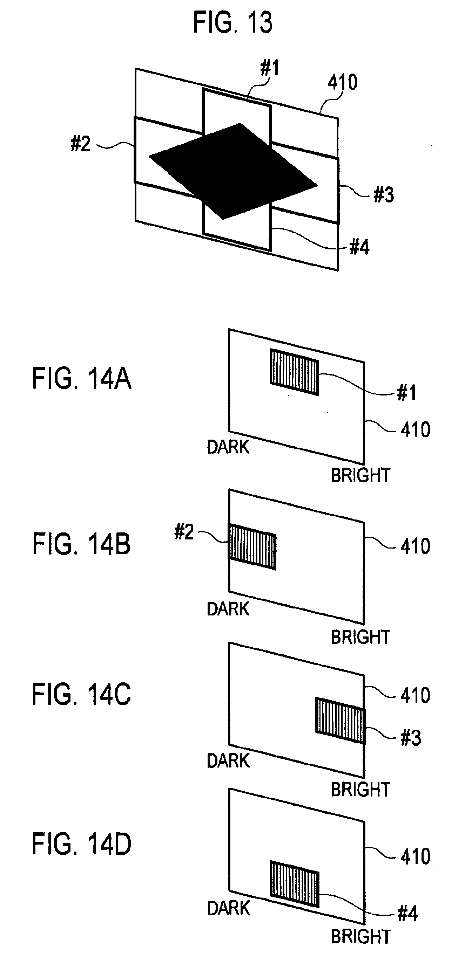

Specifically, as shown in Fig. 13, the projection-enable range 410 includes a plurality of image regions (for example, image region #1 to image region #4). These image regions each are divided so as to partially include a test pattern image.

Here, the projection display apparatus 100, as shown in Fig. 14(a), displays a focus adjustment image in the image region #1, and then, adjusts a focus of the focus adjustment image displayed in the image region #1, for the image region #1. Subsequently, the projection display apparatus 100 specifies line segments included in a pickup image as a part of the test pattern image, based upon a pickup image as a part of the test pattern image displayed in the image region #1 in which a focus is adjusted.

Similarly, the projection display apparatus 100, as shown in Fig.14(b) to Fig. 14(d), sequentially displays focus adjustment images in the image region #2 to the image region #4, and then, adjusts a focus of the focus adjustment image displayed in a respective one of the image region #2 to the image region #4, for the respective one of the image region #2 to the image region #4. Subsequently, the projection display apparatus 100 sequentially specifies the line segments included in a part of the test pattern image, based upon the pickup image as a part of the test pattern images displayed in the image region #2 to the image region #4 in which a focus is adjusted.

(Operation of Projection Display Apparatus)

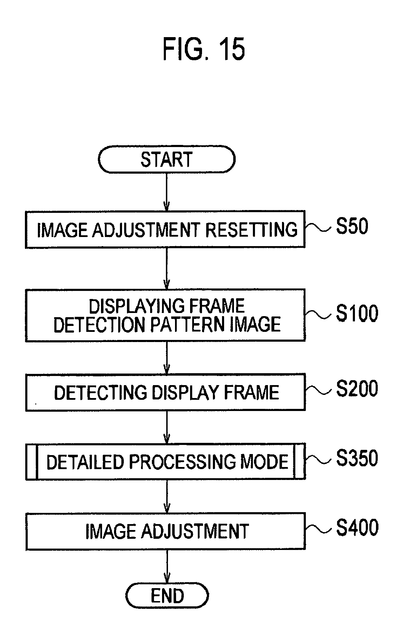

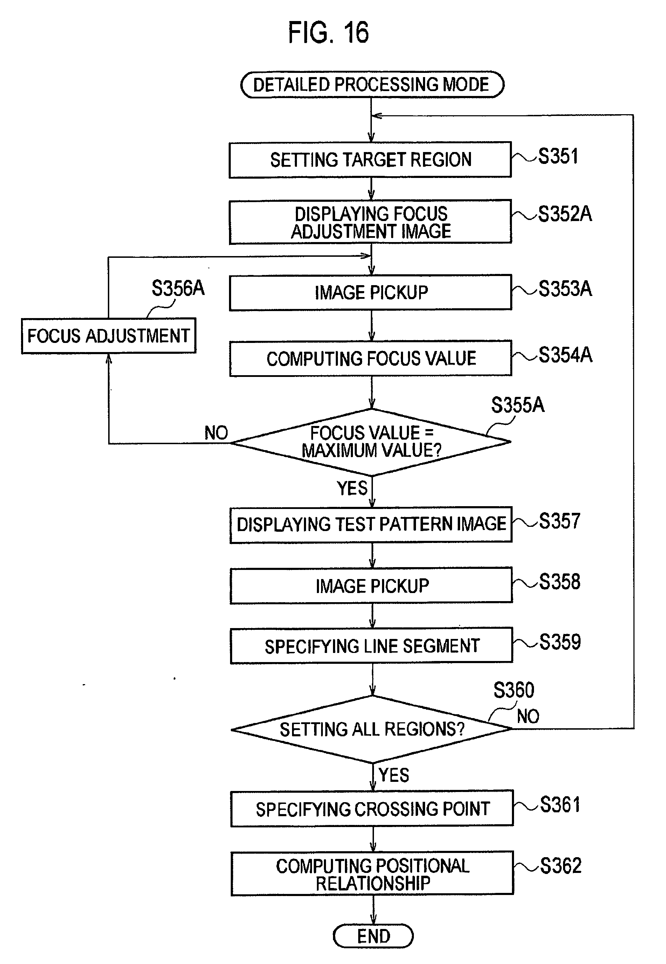

Hereinafter, an operation of a projection display apparatus (control unit) according to exemplary modification 1 will be described with reference to the drawings. Fig. 15 and Fig. 16 are flowcharts showing an operation of the projection display apparatus 100 (control unit 200) according to exemplary modification 1. In Fig. 15, like processing steps shown in Fig. 11 are designated by like reference numerals. Therefore, a description of the processing shown in step 100, step 200, and step 400 is omitted here.

As shown in Fig. 15, in step 350, the projection display apparatus 100 specifies line segments included in a test pattern image, for a respective one of a plurality of image regions divided so as to partially include the test pattern image, and then, computes a positional relationship between the projection display apparatus 100 and the projection plane 400 (divisional processing mode). A detailed description of the divisional processing mode will be given with reference to Fig. 16.

As shown in Fig. 16, in step S351, the projection display apparatus 100 sets a target region in which line segments are to be specified, from among a plurality of image regions divided so as to partially include the test pattern image. For example, the projection display apparatus 100 sets the image region #1 as a target region.

In step 352A, the projection display apparatus 100 displays (projects) a focus adjustment image on the projection plane 400, for the target region. The focus adjustment image is an image or the like on which white stripes and black stripes are alternately disposed, for example.

In step 353A, the image pickup element 300 provided in the projection display apparatus 100 picks up an image on the projection plane 400. That is, the image pickup element 300 picks up the focus adjustment image projected at a position corresponding to the target region (for example, image region #1).

In step 354A, the projection display apparatus 100 computes a focus value of the focus adjustment image projected at the position corresponding to the target region (for example, image region #1).

In step 355A, the projection display apparatus 100 determines whether or not the focus value of the focus adjustment image projected at the position corresponding to the target region (for example, image region #1) is at its maximum value. The projection display apparatus 100 migrates to the processing of step 357, in a case where the focus value is at its maximum value. The projection display apparatus 100 migrates to the processing of step 356A, in a case where the focus value is not at its maximum value.

In step 356A, the projection display apparatus 100 adjusts a focus of the focus adjustment image projected in the target region, for the target region (for example, image region #1). Specifically, the projection display apparatus 100 shifts the lens group provided in the projection unit 110, based upon the pickup image of the focus adjustment image.

That is, the projection display apparatus 100 adjusts the focus of the focus adjustment image projected in the target region so that the focus value is at its maximum value for the target region (for example, image region #1), by means of loop processing of step 353A to step 356A.

In step 357, the projection display apparatus 100 displays (projects) a test pattern image on the projection plane 400.

In step 358, the image pickup element 300 provided in the projection display apparatus 100 picks up an image on the projection plane 400. That is, the image pickup element 300 picks up the test pattern image projected at the position corresponding to the target region (for example, image region #1).

In step 359, the projection display apparatus 100 specifies four line segments (at least one of $L_t1$ to $L_t4$) included in a part of the pickup test pattern image corresponding to the target region, based upon a part of the pickup test pattern image corresponding to the target region (for example, image region #1).

In step 360, the projection display apparatus 100 determines whether or not all of the plurality of image regions configured to partially include the test pattern image are set as target regions.

In step 361, the projection display apparatus 100 specifies four line segments ($L_t1$ to $L_t4$) included in a pickup test pattern image, by employing the line segments specified in a respective one of a plurality of image regions configured so as to partially include the test pattern image. Subsequently, the projection display apparatus 100 specifies four crossing points ($P_t1$ to $Pt4$) included in the pickup test pattern image.

In step 362, the projection display apparatus 100 computes a positional relationship between the projection display apparatus 100 and the projection plane 400, based upon four crossing points ($P_s1$ to $P_s4$) included in the storage test pattern image and four crossing points ($P_t1$ to $P_t4$) included in the pickup test pattern image.

(Function(s) and Advantageous Effect(s))

According to exemplary modification 1, in the divisional processing mode, the image pickup element 300 picks up a test pattern image in a respective one of a plurality of image regions in a state in which a focus is adjusted by the plurality of image regions; and the projection display apparatus 100 specifies three or more line segments included in the test pattern image, based upon the pickup image of the test pattern image in a respective one of a plurality of image regions.

Therefore, in a case in which an optical axis of the projection display apparatus 100 is extremely inclined relative to a normal line of the projection plane 400, even if a focus cannot be adjusted for the entirety of the test pattern image, the precision of specifying three or more line segments included in the test pattern image is improved.

In a case where a focus cannot be adjusted for the entirety of the test pattern image, it should be noted that: the precision of edge detection or the like lowers; and the precision of specifying three or more line segments included in the test pattern image is low.

[Exemplary Modification 2]

Hereinafter, exemplary modification 2 of the first embodiment will be described with reference to the drawings. Hereinafter, differences from exemplary modification 1 will be mainly described.

Specifically, according to exemplary modification 1, in a divisional processing mode, the image pickup element 300 picks up a test pattern image in a respective one of a plurality of regions in a state in which a focus is adjusted in a respective one of the plurality of image regions, and the projection display apparatus 100 specifies three or more line segments included in the test pattern image, based upon the pickup image of the test pattern image in a respective one of the plurality of image regions.

In contrast to this, according to exemplary modification 2, the image pickup element 300 picks up a test pattern image in a respective one of a plurality of image regions in a state in which exposure condition is adjusted by the plurality of image regions, and then, the projection display apparatus 100 specifies three or more line segments including the test pattern image, based upon the pickup image of the test pattern image in a respective one of the plurality of image regions.

(Configuration of Control Unit)

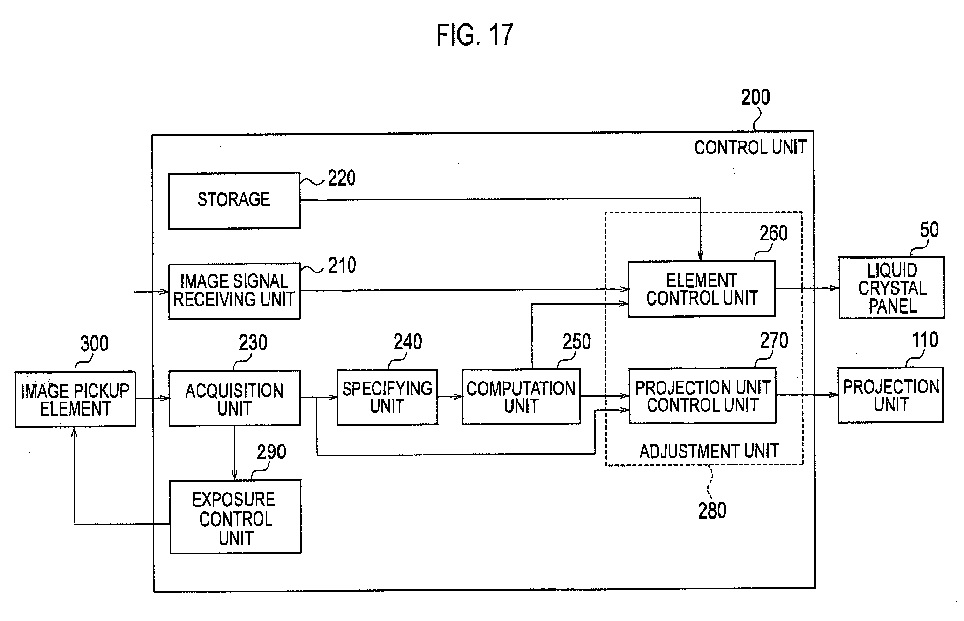

Hereinafter, a control unit according to exemplary modification 2 will be described with reference to the drawings. Fig. 17 is a block diagram depicting a control unit 200 according to exemplary modification 2. In Fig. 17, like constituent elements shown in Fig. 3 are designated by like reference numerals.

As shown in Fig. 17, the control unit 200 has an exposure control unit 290 in addition to the constituent elements shown in Fig. 3.

The exposure control unit 290 adjusts exposure condition of the image pickup element 300, based upon a pickup image of an exposure adjustment image. Specifically, the exposure control unit 290 adjusts the exposure condition of the image pickup element 300 for a respective one of a plurality of image regions divided so as to partially include a test pattern image. For example, the exposure condition is an exposure time of the image pickup element 300. The exposure condition may include a setting value of a gain of the image pickup element 300.

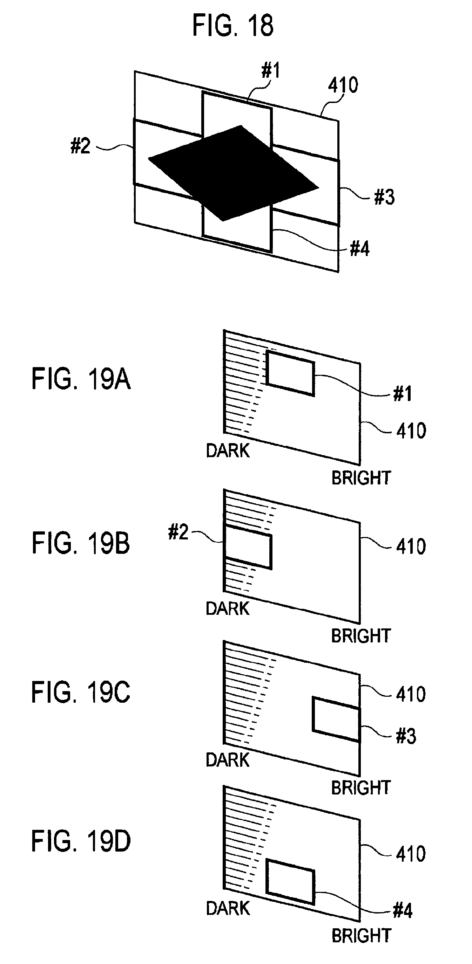

According to exemplary modification 2, as shown in Fig. 18, the projection-enable range 410 includes a plurality of image regions (for example, image region #1 to image region #4), like exemplary modification 1. The image regions each are divided so as to partially include the test pattern image.

Here, the projection display apparatus 100, as shown in Fig. 19(a), displays an exposure adjustment image and then adjusts the exposure condition of the image pickup element 300 for the image region #1. Subsequently, the projection display apparatus 100 specifies line segments included in a pickup image as a part of the test pattern image, based upon the pickup image as a part of the test pattern image displayed in the image region #1 in which exposure condition is adjusted.

Similarly, the projection display apparatus 100, as shown in Fig.19(b) to Fig. 19(b), sequentially displays exposure adjustment images and then adjusts the exposure condition of the image pickup element 300 for a respective one of the image region #2 to the image region #4. Subsequently, the projection display apparatus 100 sequentially specifies the line segments included in a part of the test pattern image, based upon the pickup image as a part of the test pattern image displayed in the image region #2 to the image region #4 in which exposure condition is adjusted.

(Operation of Projection Display Apparatus)

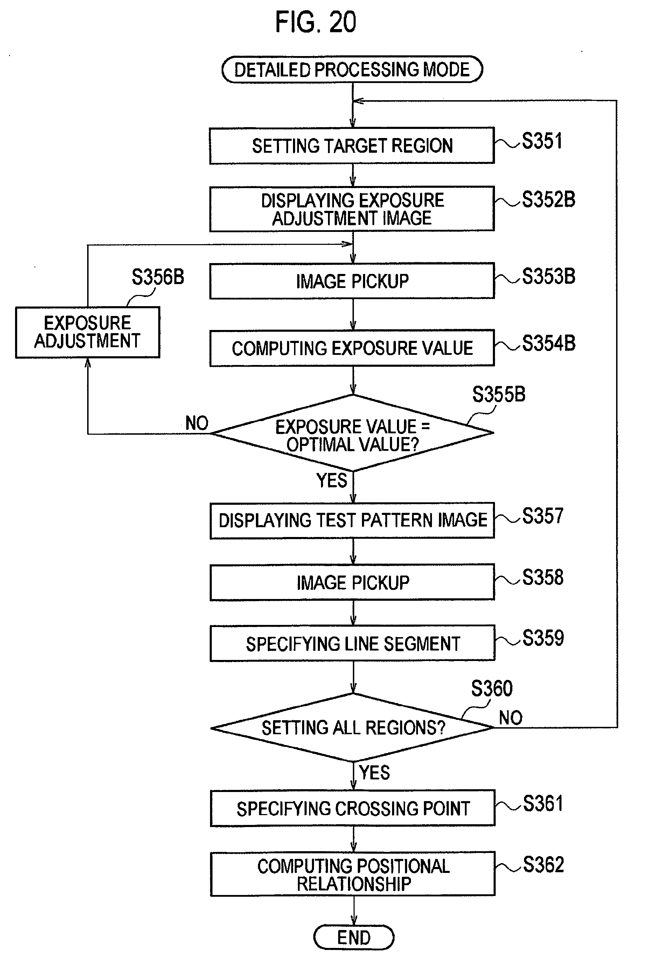

Hereinafter, an operation of the projection display apparatus (control unit) according to exemplary modification 2 will be described with reference to the drawings. Fig. 20 is a flowchart illustrating an operation of the projection display apparatus 100 (control unit 200) according to exemplary modification 2. Fig. 20 is a flowchart illustrating a divisional processing mode. In Fig. 20, like processing steps shown in Fig. 16 are designated by like reference numerals. Therefore, a description of the processing of step 351 and step 357 to step 362 is omitted here.

As shown in Fig. 20, in step 352B, the projection display apparatus 100 displays (projects) an exposure adjustment image. The exposure adjustment image is a white image or the like, for example.

In step 353B, the image pickup element 300 provided in the projection display apparatus 100 picks up an image on the projection plane 400. That is, the image pickup element 300 picks up at least the exposure adjustment image projected at a position corresponding to a target region (for example, image region #1).

In step 354B, the projection display apparatus 100 computes an exposure value of the exposure adjustment image projected at the position corresponding to the target region (for example, image region #1).

In step 355B, the projection display apparatus 100 determines whether or not the exposure value of the exposure adjustment image projected at the position corresponding to the target region (for example, image region #1) is at its optimal value. The projection display apparatus 100 migrates to the processing of step 357 in a case where the exposure value is at its optimal value. The projection display apparatus 100 migrates to the processing of step 356 in a case where the exposure value is not at its optimal value.

In step 356B, the projection display apparatus 100 adjusts exposure condition of the image pickup element 300 for the target region (for example, image region #1). Specifically, the projection display apparatus 100 adjusts the exposure condition (for example, shutter speed) of the image pickup element 300, based upon the pickup image of the exposure adjustment image.

That is, the projection display apparatus 100 adjusts the exposure condition of the focus adjustment image projected in the target region, so that the exposure value is at its optimal value for the target region (for example, image region #1), by means of the loop processing of step 353B to step 356B.

(Function(s) and Advantageous Effect(s))

According to exemplary modification 2, in the divisional processing mode, the image pickup element 300 picks up a test pattern image in a respective one of a plurality of image regions in a state in which exposure condition is adjusted by a respective one of a plurality of image regions, and the projection display apparatus 100 specifies three or more line segments included in the test pattern image, based upon the pickup image of the test pattern image in the plurality of image regions.

Therefore, in a case where the optical axis of the projection display apparatus 100 is extremely inclined relative to the normal line of the projection plane 400, even if the brightness of the projection-enable range 410 is lacking in uniformity, the precision of specifying three or more line segments included in the test pattern image is improved.

In the case where the brightness of the projection-enable range 410 is lacking in uniformity, it should be noted that: the quality of the image picked up by means of the image pickup element 300 lowers; and the precision of specifying three or more line segments included in the test pattern image is low.

[Exemplary Modification 3]

Hereinafter, exemplary modification 3 of the first embodiment will be described with reference to the drawings. Hereinafter, differences from the first embodiment will be mainly described.

Specifically, in exemplary modification 3, the projection display apparatus 100 performs operation of a divisional processing mode, in a case where a positional relationship between the projection display apparatus 100 and the projection plane 400 is outside an allowable range as a result obtained by performing operation of a batch processing mode.

(Configuration of Control Unit)

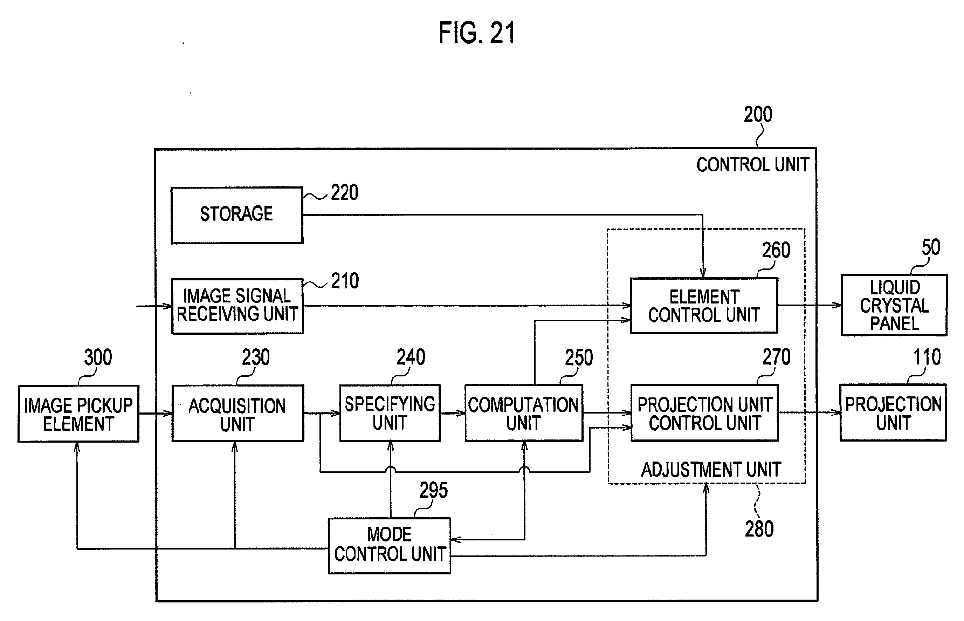

Hereinafter, a control unit according to exemplary modification 3 will be described with reference to the drawings. Fig. 21 is a block diagram depicting a control unit 200 according to exemplary modification 3. In Fig. 21, like constituent elements shown in Fig. 3 are designated by like reference numerals.

As shown in Fig. 21, the control unit 200 has a mode control unit 295 in addition to the constituent elements shown in Fig. 3.

The mode control unit 295 controls a batch processing mode and a divisional processing mode. Specifically, the mode control unit 295 controls the acquisition unit 230, the specifying unit 240, the computation unit 250, and the image pickup element 300 in accordance with a processing mode.

In detail, the mode control unit 295 acquires from the computation unit 250 a positional relationship between the projection display apparatus 100 and the projection plane 400, the positional relationship having been computed in the batch processing mode. Subsequently, the mode control unit 295 determines whether or not the positional relationship is within an allowable range.

In the case where the positional relationship is within the allowable range, the mode control unit 295 instructs the element control unit 260 to adjust the shape of an image projected on the projection plane 400, based upon the positional relationship computed in the batch processing mode.

On the other hand, in the case where the positional relationship is not within the allowable range, the mode control unit 295 controls the acquisition unit 230, the specifying unit 240, the computation unit 250, the projection unit adjustment unit 270, and the image pickup element 300 to perform operation of a divisional processing mode. Subsequently, the mode control unit 295 instructs the element control unit 260 to adjust the shape of the image projected on the projection plane 400, based upon the positional relationship computed in the divisional processing mode.

(Operation of Projection Display Apparatus)

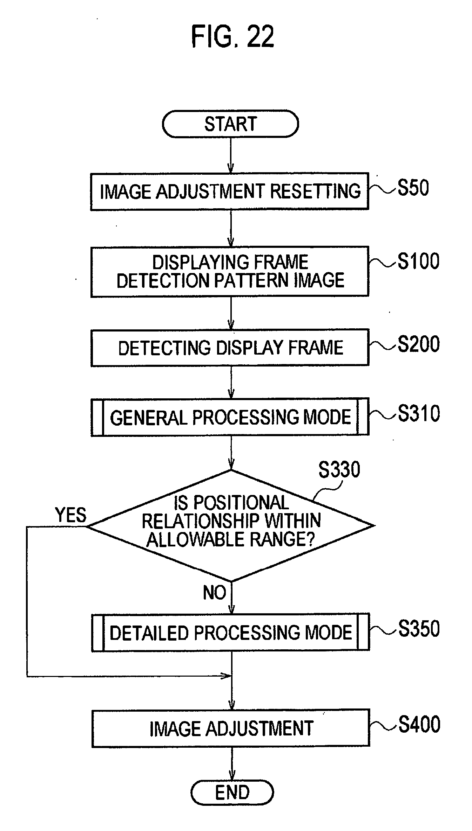

Hereinafter, an operation of the projection display apparatus (control unit) according to exemplary modification 3 will be described with reference to the drawings. Fig. 22 is a flowchart illustrating an operation of the projection display apparatus 100 (control unit 200) according to exemplary modification 3. In Fig. 22, like processing steps shown in Fig. 11 are designated by like reference numerals. Therefore, a description of the processing of step 100, step 200, and step 400 is omitted here.
Since a detailed description of step 310 is similar to that of Fig. 12, a description of the processing of step 310 is omitted here. In addition, since a detailed description of step 350 is similar to that of Fig. 16, a description of the processing of the step 350 is omitted here.
As shown in Fig. 22, the projection display apparatus 100 determines whether or not a positional relationship between the projection display apparatus 100 and the projection plane 400 is within an allowable range as a result obtained by performing operation of the batch processing mode. In the case where the positional relationship is within the allowable range, the projection display apparatus 100 migrates to the processing of step 400 without performing operation of the divisional processing mode. In the case where the positional relationship is not within the allowable range, the projection display apparatus 100 migrates to the processing of step 350.

(Effect(s) and Advantageous Effect(s))

According to exemplary modification 3, the projection display apparatus 100 performs operation of the divisional processing mode in the case where the positional relationship between the projection display apparatus 100 and the projection plane 400 is outside the allowable range as a result obtained by performing operation of the batch processing mode. That is, the divisional processing mode is eliminated in a case where there is no need to perform operation of the divisional processing mode. Therefore, an increase in a processing burden of image adjustment can be restrained.

[Exemplary Modification 4]

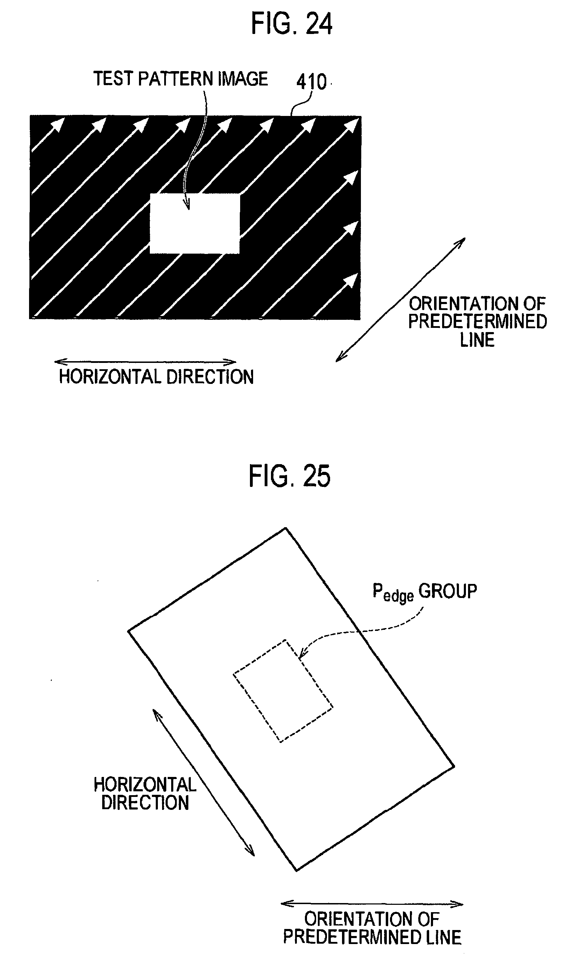

Hereinafter, exemplary modification 4 of the first embodiment will be described with reference to the drawings. Hereinafter, differences from the first embodiment will be mainly described.

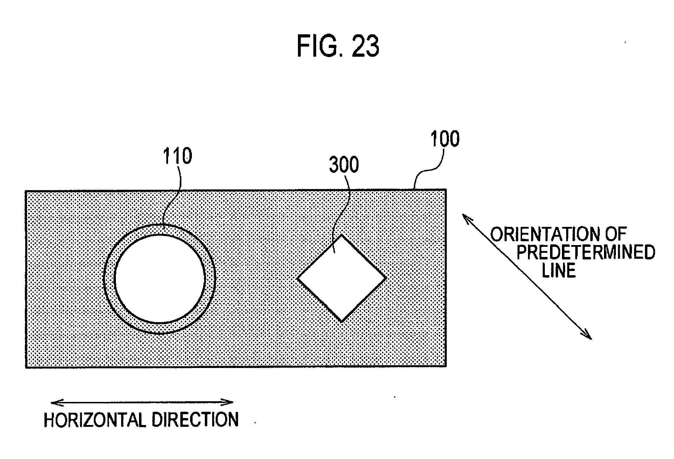

Fig. 23 is a front view of a projection display apparatus 100 according to exemplary modification 4. As shown in Fig. 23, the image pickup element 300 is disposed so that the orientation of a predetermined line in a case where the image pickup element 300 outputs image pickup data is different from a horizontal direction.
Therefore, as shown in Fig. 24, even in a case where a test pattern image is formed in a rectangular shape which is substantially similar to that of the projection-enable range 410, the four edges of the test pattern image have an inclination relative to the orientation of the predetermined line in a case where the image pickup element 300 outputs image pickup data.
In this manner, as shown in Fig. 25, the point group $P_{edge}$ having a difference in shading or contrast (edge) is detected with an inclination relative to the orientation of the predetermined line.

[Other Embodiments]

While the present invention has been described by way of the foregoing embodiments, it should not be understood that the statements and drawings forming part of this disclosure limits the invention. From this disclosure, a variety of alternate embodiments, examples, and applicable techniques would have been apparent to one skilled in the art.
The foregoing embodiments illustrated an incandescent light source as a light source. However, the light source may be an LED (Laser Emitting Diode) or an LD (Laser Diode).
The foregoing embodiments illustrated a transmissive liquid crystal panel as a light valve. However, the light valve may be a reflective liquid crystal panel or a DMD (Digital Micromirror Device).
Although not set forth in the foregoing embodiments in particular, a divisional processing mode may be a combination of focus adjustment shown in exemplary modification 1 and exposure condition adjustment shown in exemplary modification 2.
Exemplary modification 3 illustrated focus adjustment shown in exemplary modification 1 as a divisional processing mode. However, the divisional processing mode of the embodiments is not limitative thereto. In exemplary modification 3, the exposure condition adjustment shown in exemplary modification 2 may be applied as the divisional processing mode.

Although not set forth in the foregoing embodiments in particular, it is preferable that the element control unit 260 controls the liquid crystal panel 50 so as not to display an image, until a test pattern image is displayed, after the display frame 420 has been detected.

Although not set forth in the foregoing embodiments in particular, it is preferable that the element control unit 260 controls the liquid crystal panel 50 so as not to display an image, until the shape of an image projected on the projection plane 400 is corrected, after three or more crossing points included in a pickup test pattern image have been acquired.

Although not set forth in the foregoing embodiments in particular, it is preferable that the element control unit 260 controls the liquid crystal panel 50 so as to display a test pattern image and a predetermined image (for example, background image) other than the test pattern image simultaneously.

A test pattern image is comprised of colors and luminance which are detectable by means of the image pickup element 300, for example, and a predetermined image other than the test pattern image is comprised of colors and luminance which are undetectable by means of the image pickup element 300.

Alternatively, a test pattern image is comprised of any of red, green, and blue colors, and a predetermine image other than the test pattern image is comprised of other colors. The image pickup element 300 can acquire a pickup image of a test pattern image by detecting only the colors configuring the test pattern image.

In a case where no image signal is inputted, the element control unit 260 may control liquid crystal panel 50 so as to display an error message as a predetermined image together with the test pattern image. Alternatively, in a case where a line segment or a cross point included in a test pattern image cannot be specified, the element control unit 260 may control the liquid crystal panel 50 so as to display an error message as a predetermined image.

In the embodiments, the projection display apparatus 100 adjusts a focus after detection of the display frame 420. However, adjustment of the embodiments is not limitative thereto. The projection display apparatus 100 may adjust a focus without detecting the display frame 420, for example. Specifically, in an ordinary use mode, since it is presupposed that a central portion of the projection-enable range 410 is included in the display frame 420, the projection display apparatus 100 may display a focus adjustment image at the central portion of the projection-enable range 410 and adjust a focus of an image (focus adjustment image) displayed at the central portion of the projection-enable range 410.

In the embodiments, a test pattern image is black at its background portion and is white at its pattern portion. However, the test pattern image of the embodiments is not limitative thereto. The image may be white at its background portion and black at its pattern portion, for example. In addition, the pattern may be blue at its background portion and white at its pattern portion. That is, there may be a difference in luminance between its background portion and its pattern portion to an extent of enabling edge detection. The extent of enabling edge detection is determined in accordance with a precision of the image pickup element 300. The greater the luminance difference between its background portion and its pattern portion is, the less necessary the precision of the image pickup element 300 is; and therefore, as a matter of course, the image pickup element 300 can be reduced in cost.

In the foregoing embodiments, the projection display apparatus 100 perform processing steps from the step of performing focus adjustment (or exposure adjustment) to the step of specifying a line segment, by target region, in a divisional processing mode. However, the apparatus of the embodiments is not limitative thereto. The projection display apparatus 100, having performed focus adjustment (or exposure adjustment) on a target-region basis and then stored a focus value (or exposure value) on the target-region basis, may specify a line segment included in each target region while the focus value (or exposure value) is changed on the target-region basis.

**Claims**

1. A projection display apparatus having an imager (50) configured to modulate light emitted from a light source (10) and a projection unit (110) configured to project light emitted from the imager (50) on a projection plane, the apparatus comprising:

   an element control unit (260) configured to control the imager so as to display a test pattern image configuring at least one portion of a respective one of three or more line segments configuring three or more crossing points;
   an acquisition unit (230) configured to acquire a pickup image of the test pattern image outputted along a predetermined line from an image pickup element (300) configured to pick up the test pattern image projected on the projection plane;
   a computation unit (250) configured to specify three or more crossing points from three or more line segments included in the pickup image, based upon the pickup image acquired by the acquisition unit, and to compute a positional relationship between the projection image apparatus and the projection plane, based upon the three or more crossing points; and

an adjustment unit (280) configured to adjust an image projected on the projection plane, based upon the positional relationship between the projection display apparatus and the projection plane, wherein

the three or more line segments have an inclination relative to the predetermined line.

2. The projection display apparatus according to claim 1, wherein
the predetermined line is a line extending along a horizontal direction.

3. The projection display apparatus according to claim 1 or 2, wherein
the element control unit (260) controls the imager so as not to display an image, until a shape of an image projected on the projection plane is corrected, after three or more crossing points included in the pickup image are acquired.

4. The projection display apparatus according to claim 1 or 2, wherein
the element control unit (260) controls the imager so as to display the test pattern image and a predetermined image other than the test pattern image.

5. The projection display apparatus according to any of claims 1 to 4, wherein
the image pickup element (300) is disposed so that the three or more line segments have an inclination relative to the predetermined line.

6. The projection display apparatus according to any of claims 1 to 5, wherein
the adjustment unit (280) includes a focus adjustment unit configured to adjust a focus of an image projected on the projection plane,
the focus adjustment unit sequentially adjusts a focus in a respective one of a plurality of image regions divided so as to partially include the test pattern image, and
the computation unit (250) specifies a line segment included in a part of the test pattern image, based upon a pickup image as a part of a test pattern image displayed in an image region in which a focus is adjusted.

7. The projection display apparatus according to any of claims 1 to 6, further comprising an exposure control unit (290) configured to sequentially adjust an exposure condition of the image pickup element (300) in a respective one of the plurality of image regions divided so as to partially include the test pattern image, wherein
the computation unit (250) specifies the line segment included in a part of the test pattern image, based upon a pickup image as a part of a test pattern image displayed in an image region in which exposure condition is adjusted.

8. The projection display apparatus according to any of claims 1 to 5, further comprising a mode control unit (295) configured to control a first processing mode and a second processing mode, wherein:

the adjustment unit (280) includes a focus adjustment unit configured to adjust a focus of the image projected on the projection plane;
the first processing mode is a mode of specifying a line segment included in the test pattern image for an entirety of the test pattern image and computing a positional relationship between the projection display apparatus and the projection plane;
the second processing mode is a mode of specifying a line segment included in the test pattern image for a respective one of a plurality of image regions divided so as to partially include the test pattern image and computing a positional relationship between the projection display apparatus and the projection plane; and
the mode control unit (295) performs operation of the second processing mode, in a case where the positional relationship between the projection display apparatus and the projection plane is outside an allowable range, as a result obtained by performing operation of the first processing mode.

9. The projection display apparatus according to any of claims 1 to 6, further comprising a mode control unit (295) configured to control a first processing mode and a second processing mode, wherein:

the adjustment unit includes an exposure control unit (290) configured to adjust an exposure condition of the image pickup;
the first processing mode is a mode of specifying a line segment included in the test pattern image for an entirety of the test pattern image and computing a positional relationship between the projection display apparatus and the projection plane;

the second processing mode is a mode of specifying a line segment included in the test pattern image for a respective one of a plurality of image regions divided so as to partially include the test pattern image and computing a positional relationship between the projection display apparatus and the projection plane; and

the mode control unit (295) performs operation of the second processing mode, in a case where the positional relationship between the projection display apparatus and the projection plane is outside an allowable range, as a result obtained by performing operation of the first processing mode.

10. An image adjustment method applied to a projection display apparatus having an imager (50) configured to modulate light emitted from a light source (10), and a projection unit (110) configured to project light emitted from the imager (50) on a projection plane, the method comprising:

step A of displaying a test pattern image configuring at least one portion of a respective one of three or more line segments configuring three or more crossing points;

step B of picking up the test pattern image projected on the projection plane, and acquiring a pickup image of the test pattern image along a predetermined line having an inclination relative to the three or more line segments;

step C of computing a positional relationship between the projection display apparatus and the projection plane, based upon the pickup image; and

step D of adjusting an image projected on the projection plane, based upon the positional relationship between the projection display apparatus and the projection plane.

# FIG. 1

410
420
400

M
$\theta$
N

HORIZONTAL
DIRECTION

300
100

FIG. 2

EP 2 282 547 A2

# FIG. 3

CONTROL UNIT 200

STORAGE 220

IMAGE SIGNAL RECEIVING UNIT 210

IMAGE PICKUP ELEMENT 300

ACQUISITION UNIT 230

SPECIFYING UNIT 240

COMPUTATION UNIT 250

ELEMENT CONTROL UNIT 260

PROJECTION UNIT CONTROL UNIT 270

LIQUID CRYSTAL PANEL 50

PROJECTION UNIT 110

ADJUSTMENT UNIT 280

EP 2 282 547 A2

# FIG. 4

ORIENTATION OF
PREDETERMINED LINE

# FIG. 5

ORIENTATION OF
PREDETERMINED LINE

# FIG. 6

ORIENTATION OF
PREDETERMINED LINE

# FIG. 7

ORIENTATION OF
PREDETERMINED LINE

# FIG. 8

ORIENTATION OF
PREDETERMINED LINE

# FIG. 9

# FIG. 10

# FIG. 11

```
          ┌─────────────┐
          │    START    │
          └──────┬──────┘
                 │
                 ▼
   ┌──────────────────────────────┐
   │ IMAGE ADJUSTMENT RESETTING   │⎯S50
   └──────────────┬───────────────┘
                  │
                  ▼
   ┌──────────────────────────────┐
   │      DISPLAYING FRAME        │⎯S100
   │  DETECTION PATTERN IMAGE     │
   └──────────────┬───────────────┘
                  │
                  ▼
   ┌──────────────────────────────┐
   │   DETECTING DISPLAY FRAME    │⎯S200
   └──────────────┬───────────────┘
                  │
                  ▼
   ┌──────────────────────────────┐
   │  GENERAL PROCESSING MODE     │⎯S310
   └──────────────┬───────────────┘
                  │
                  ▼
   ┌──────────────────────────────┐
   │      IMAGE ADJUSTMENT        │⎯S400
   └──────────────┬───────────────┘
                  │
                  ▼
          ┌─────────────┐
          │     END     │
          └─────────────┘
```

# FIG. 12

```
            ┌─────────────────────────┐
            │ GENERAL PROCESSING MODE │
            └─────────────────────────┘
                         │
                         ▼
            ┌─────────────────────────┐
            │   DISPLAYING FOCUS      │──── S311
            │   ADJUSTMENT IMAGE      │
            └─────────────────────────┘
                         │
                         ▼
            ┌─────────────────────────┐
  S315      │     IMAGE PICKUP        │──── S312
            └─────────────────────────┘
                         │
  ┌──────────┐           ▼
  │  FOCUS   │ ┌─────────────────────────┐
  │ADJUSTMENT│ │  COMPUTING FOCUS VALUE  │──── S313
  └──────────┘ └─────────────────────────┘
                         │         S314
                         ▼
            ┌─────────────────────────┐
       NO   ◇   FOCUS VALUE =         ◇
  ◄─────────  MAXIMUM VALUE?
            └─────────────────────────┘
                       YES │
                           ▼
            ┌─────────────────────────┐
            │ DISPLAYING TEST PATTERN IMAGE │──── S316
            └─────────────────────────┘
                         │
                         ▼
            ┌─────────────────────────┐
            │     IMAGE PICKUP        │──── S317
            └─────────────────────────┘
                         │
                         ▼
            ┌─────────────────────────┐
            │  SPECIFYING LINE SEGMENT │──── S318
            └─────────────────────────┘
                         │
                         ▼
            ┌─────────────────────────┐
            │ SPECIFYING CROSSING POINT │──── S319
            └─────────────────────────┘
                         │
                         ▼
            ┌─────────────────────────┐
            │ COMPUTING POSITIONAL    │──── S320
            │    RELATIONSHIP         │
            └─────────────────────────┘
                         │
                         ▼
                    ┌─────────┐
                    │   END   │
                    └─────────┘
```

## FIG. 13

FIG. 14A

DARK

BRIGHT

FIG. 14B

DARK

BRIGHT

FIG. 14C

DARK

BRIGHT

FIG. 14D

DARK

BRIGHT

# FIG. 15

```
┌─────────────┐
│    START    │
└─────────────┘
       │
       ▼
┌──────────────────────────────┐
│ IMAGE ADJUSTMENT RESETTING   │ ～ S50
└──────────────────────────────┘
       │
       ▼
┌──────────────────────────────┐
│     DISPLAYING FRAME         │
│ DETECTION PATTERN IMAGE      │ ～ S100
└──────────────────────────────┘
       │
       ▼
┌──────────────────────────────┐
│   DETECTING DISPLAY FRAME    │ ～ S200
└──────────────────────────────┘
       │
       ▼
┌──────────────────────────────┐
│  DETAILED PROCESSING MODE    │ ～ S350
└──────────────────────────────┘
       │
       ▼
┌──────────────────────────────┐
│      IMAGE ADJUSTMENT        │ ～ S400
└──────────────────────────────┘
       │
       ▼
┌─────────────┐
│     END     │
└─────────────┘
```

# FIG. 16

```
( DETAILED PROCESSING MODE )
            │
            ▼
   SETTING TARGET REGION ────── S351
            │
            ▼
   DISPLAYING FOCUS ────── S352A
   ADJUSTMENT IMAGE
            │
            ▼
   IMAGE PICKUP ────── S353A
            │
            ▼
   COMPUTING FOCUS VALUE ────── S354A
            │
            ▼
   FOCUS VALUE =          S355A
NO  MAXIMUM VALUE?
            │ YES
            ▼
   DISPLAYING TEST PATTERN IMAGE ────── S357
            │
            ▼
   IMAGE PICKUP ────── S358
            │
            ▼
   SPECIFYING LINE SEGMENT ────── S359
            │
            ▼          S360
   SETTING ALL REGIONS?  NO
            │ YES
            ▼
   SPECIFYING CROSSING POINT ────── S361
            │
            ▼
   COMPUTING POSITIONAL ────── S362
   RELATIONSHIP
            │
            ▼
         ( END )
```

S356A

FOCUS ADJUSTMENT

## FIG. 17

## FIG. 18

## FIG. 19A

DARK

BRIGHT

## FIG. 19B

DARK

BRIGHT

## FIG. 19C

DARK

BRIGHT

## FIG. 19D

DARK

BRIGHT

# FIG. 20

```
( DETAILED PROCESSING MODE )
            │
            ▼
   SETTING TARGET REGION          ∼S351
            │
            ▼
   DISPLAYING EXPOSURE            ∼S352B
   ADJUSTMENT IMAGE
            │
            ▼
   IMAGE PICKUP                   ∼S353B
            │
            ▼
   COMPUTING EXPOSURE VALUE       ∼S354B
            │
            ▼                      S355B
      EXPOSURE VALUE =
 NO   OPTIMAL VALUE?
            │
           YES
            │
            ▼
   DISPLAYING TEST PATTERN IMAGE  ∼S357
            │
            ▼
   IMAGE PICKUP                   ∼S358
            │
            ▼
   SPECIFYING LINE SEGMENT        ∼S359
            │
            ▼                      S360
      SETTING ALL REGIONS?        NO
            │
           YES
            │
            ▼
   SPECIFYING CROSSING POINT      ∼S361
            │
            ▼
   COMPUTING POSITIONAL           ∼S362
   RELATIONSHIP
            │
            ▼
         ( END )
```

EXPOSURE
ADJUSTMENT    S356B

## FIG. 21

EP 2 282 547 A2

# FIG. 22

```
        ┌─────────────┐
        │    START    │
        └──────┬──────┘
               ↓
   ┌───────────────────────────┐
   │ IMAGE ADJUSTMENT RESETTING │ ∿S50
   └───────────┬───────────────┘
               ↓
   ┌───────────────────────────┐
   │     DISPLAYING FRAME       │ ∿S100
   │  DETECTION PATTERN IMAGE   │
   └───────────┬───────────────┘
               ↓
   ┌───────────────────────────┐
   │  DETECTING DISPLAY FRAME   │ ∿S200
   └───────────┬───────────────┘
               ↓
   ┌───────────────────────────┐
   │   GENERAL PROCESSING MODE  │ ∿S310
   └───────────┬───────────────┘
               ↓
                              S330
           ╱IS POSITIONAL╲
  YES ────╱RELATIONSHIP WITHIN╲
         ╲ ALLOWABLE RANGE? ╱
          ╲               ╱
               NO ↓
   ┌───────────────────────────┐
   │  DETAILED PROCESSING MODE  │ ∿S350
   └───────────┬───────────────┘
               ↓
   ┌───────────────────────────┐
   │      IMAGE ADJUSTMENT      │ ∿S400
   └───────────┬───────────────┘
               ↓
        ┌─────────────┐
        │     END     │
        └─────────────┘
```

FIG. 23

110    300    100

ORIENTATION OF
PREDETERMINED
LINE

◄────►
HORIZONTAL DIRECTION

# FIG. 24

TEST PATTERN IMAGE    410

ORIENTATION OF
PREDETERMINED
LINE

HORIZONTAL DIRECTION

# FIG. 25

$P_{edge}$ GROUP

HORIZONTAL
DIRECTION

ORIENTATION OF
PREDETERMINED LINE

**EP 2 282 547 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009179774 A
- JP 2010118460 A
- JP 2005318652 A